# FASCICULE DE BREVET EUROPEEN

(11) **EP 4 080 293 B1**
(45) Date de publication et mention de la délivrance du brevet: **16.10.2024**
(21) Numéro de dépôt: 22166835.3
(22) Date de dépôt: 05.04.2022
(51) Int. Cl.: G04B 29/04, G04B 37/22, C04B 35/64, C04B 35/82, B32B 18/00

(54) **PROCÉDÉ DE FABRICATION D'UN COMPOSANT HORLOGER EN MATÉRIAU COMPOSITE**
VERFAHREN ZUR HERSTELLUNG EINER UHRENKOMPONENTE AUS VERBUNDMATERIAL
METHOD FOR MANUFACTURING A TIMEPIECE COMPONENT MADE FROM COMPOSITE MATERIAL

(30) Priorité: 19.04.2021 CH 4102021
(43) Date de publication de la demande: 26.10.2022
(73) Titulaire: Manufacture d'Horlogerie Audemars Piguet SA, 1348 Le Brassus (CH)
(72) Inventeur: Le Loarer, Thibaut, 74270 Chavannaz (FR)
(74) Mandataire: P&TS SA (AG, Ltd.)

(56) Documents cités:
- EP-A1- 3 404 002
- EP-A1- 3 674 816
- EP-A1- 3 795 341
- CN-A- 108 299 000
- JP-A- 2014 012 615
- US-A1- 2017 320 784
- US-B1- 8 906 498

## Description

### Domaine technique

La présente invention concerne un procédé de fabrication d'un composant horloger en matériau composite à matrice céramique. L'invention concerne également une méthode d'authentification ou d'identification d'une pièce horlogère.

### Etat de la technique

Les matériaux composites classiques, qui possèdent une matrice en polymère et des fibres, présentent de bonnes résistances mécaniques mais une dureté faible et donc une résistance moyenne à l'abrasion et à la résistance aux rayures. Les matériaux composites forgés, quant à eux, présentent une esthétique inhomogène et aléatoire permettant la réalisation de pièces uniques. Les matériaux composites forgés tels que les fibres de carbone, d'aramide (kevlar^{®}) ou de verre, parfois combinées et mis en structure à l'aide d'une résine polymère ne présentent pas une très bonne résistance aux rayures et une faible dureté (<100HV).

Les céramiques, par exemple de type zircone ou alumine présentent une haute résistance à l'abrasion et peuvent être considérées comme inrayables. Les céramiques sont des matériaux présentant un aspect visuel homogène et identique d'une pièce à l'autre ce qui a un impact négatif sur la diversité de l'aspect visuel des pièces en céramique. Par ailleurs, les céramiques ont l'inconvénient d'être fragiles de part de leur structure.

Il est connu de l'état de la technique l'utilisation d'un procédé de frittage FAST/SPS (Spark Plasma Sintering) afin d'augmenter la résistance mécanique de matériau en céramique.

A titre d'exemple, US8906498 divulgue un procédé de fabrication d'un sandwich de matériau résistant aux chocs. Le procédé comporte un processus de frittage SPS (Spark Plasma Sintering) d'une poudre en céramique pour former une tuile et l'accouplement d'une couche de support ductile à la tuile. La couche de support ductile peut comprendre une couche de fibres de polyéthylène.

Un autre exemple est divulgué dans CN108299000A qui décrit une méthode de préparation à basse température d'un matériau composite de type SiC. La méthode comprend notamment le découpage de fibres de carbone en une longueur de 1 à 3 mm et différentes étapes pour obtenir une poudre uniformément mélangée. Une opération de frittage SPS de la poudre, placée dans une matrice en graphite, est ensuite réalisée.

Ces procédés ont un impact négatif sur la diversité de l'aspect visuel des pièces en céramique obtenues qui sont essentiellement homogènes.

EP3795341 divulgue un composant horloger en un matériau composite composé d'une matrice à base de polymère et d'un renfort constitué d'au moins deux natures de fibres coupées différentes dont l'une est un polyazole.

EP3674816 divulgue un article décoratif, notamment en composant horloger réalisé dans un matériau comprenant en poids:60 à 90% d'une matière métallique ou céramique ayant une densité supérieure ou égale à 5 g/cm3 ; 10 à 32% d'une matière plastique comprenant une résine thermoplastique et un agent de couplage; 0 à 8% d'un renfort et 0 à 3% d'un pigment.

Un but de l'invention est de proposer un procédé de fabrication alternatif d'un matériau composite à matrice céramique permettant de produire des composants horlogers d'aspect visuel unique et aléatoire d'une pièce à l'autre.

Un autre but de l'invention est de proposer un procédé de fabrication d'un matériau composite à matrice céramique qui a l'avantage d'être léger et qui possède une haute résistance aux rayures ainsi qu'une haute résistance mécanique.

### Bref résumé de l'invention

Selon l'invention, ces buts sont atteints notamment par un procédé de fabrication d'un composant horloger en matériau composite à matrice céramique. Le procédé de fabrication comporte les étapes suivantes :
- déposer dans un moule une succession de couches comprenant chacune une poudre céramique, au moins une couche de la succession de couches comportant en outre des fibres mélangées à la poudre céramique, les fibres étant disposées de manière aléatoire ;
- effectuer une opération de frittage FAST/SPS ;
- démouler le composant horloger fritté comportant la succession de couches, et
- usiner ou terminer le composant fritté aux dimensions finales du composant horloger de telle manière que les fibres soient en partie visibles en surface du composant horloger.

Selon une forme de réalisation, au moins deux couches de la succession de couches comportent des fibres.

Selon une forme de réalisation, les aux moins deux couches sont séparées par une autre couche de la succession de couches. L'autre couche ne comporte pas de fibres.

Selon une forme de réalisation, les aux moins deux couches sont adjacentes. La composition de l'une des deux couches adjacentes est différente de la composition de l'autre des deux couches adjacentes.

Selon une forme de réalisation, toutes les couches de la succession de couches comportent des fibres. La composition de l'une des couches est différente de la composition de l'une quelconque des autres couches.

Le temps de frittage est compris typiquement entre 1 minute et 90 minutes.

Les températures de frittage sont comprises de préférence entre 800°C et 2000°C.

Selon une forme de réalisation, la poudre céramique est un composite sélectionné parmi un des trois composites suivants : Zircone à matrice d'alumine (ZTA), Alumine à matrice Zircone (ATZ) et Zircone stabilisée au moins partiellement à l'Yttrium (Y-TZP).

La proportion en masse des fibres de ladite au moins une couche comportant des fibres est comprise entre 1.5% et 55%, préférablement entre 1.5% à 25%.

Les fibres ont une longueur comprise entre 2mm et 70mm, préférablement entre 3mm et 50mm.

Selon une forme de réalisation, le composant horloger est un composant d'un boitier de montre, notamment une carrure, un fond du boitier, une lunette ou une couronne.

Selon une forme de réalisation, le composant horloger est un composant d'un mouvement de montre, notamment une platine ou un pont.

Un composant horloger fabriqué par le procédé selon l'invention présente l'avantage de pouvoir être identifié au authentifié de manière fiable, par exemple à l'aide d'une méthode comportant les étapes suivantes :
- capturer une image du composant horloger de la pièce horlogère présentant à la surface des fibres réparties de manière aléatoire ;
- comparer cette image à une base de données d'images stockée sur une serveur, la base de données comportant une série d'images de fibres réparties de manière aléatoire, chaque image de ladite base de données étant associée à un autre élément distinctif de la pièce horlogère, et
- authentification ou identification de la pièce d'horlogère par la correspondance de l'image capturée à une des images de la base de données.

La base de données d'images est créée à partir d'une multitude d'images capturées pour chaque composant horloger fabriqué par le procédé selon l'invention.

Dans une forme de réalisation, l'élément distinctif est sélectionné parmi un numéro de série, la date de production et le calibre de la pièce horlogère.

### Brève description des figures

Des exemples de mise en oeuvre de l'invention sont indiqués dans la description illustrée par les figures annexées dans lesquelles :
- la figure 1 est une vue schématique d'une section d'un matériau composite composé de plusieurs couches de différentes natures selon une forme de réalisation de l'invention avant l'opération de frittage ;
- la figure 2 est une vue schématique d'une section du matériau composite selon la figure 1 après l'opération de frittage ;
- la figure 3 est une vue schématique d'une section d'un matériau composite composé de plusieurs couches de différentes natures selon une autre forme de réalisation de l'invention, et
- la figure 4 illustre une vue schématique d'une section d'une carrure de montre, selon une forme de réalisation de l'invention, obtenue par usinage du matériau composite de la figure 2 aux dimensions finales de la carrure de montre.

### Exemple(s) de mode de réalisation de l'invention

Le composant horloger en matériau composite, tel que décrit ultérieurement, est obtenu par un procédé de fabrication comportant notamment une opération de frittage flash, ou «*Field Assisted Sintering Technique*/*Spark Plasma Sintering (FAST*/*SPS)* » en anglais, qui est un procédé de frittage apparentée au pressage isostatique à chaud mais utilisant l'effet joule pour chauffer un poudre pré-compactée dans un moule entre deux électrodes en graphite sous atmosphère inerte ou sous vide, l'ensemble étant soumis à une pression de plusieurs mégapascals sous l'action d'une presse hydraulique. Un courant continu ou alternatif de plusieurs kiloampères, pulsé ou non, est appliqué entre les électrodes avec une tension de quelques volts.

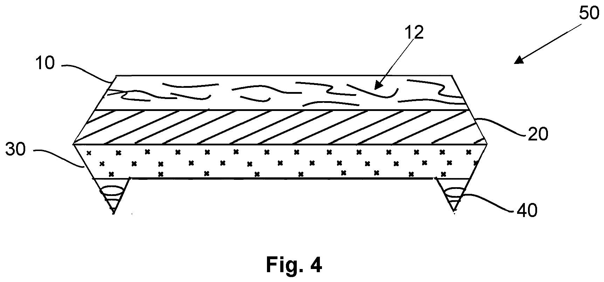

Le procédé de fabrication d'un composant horloger, par exemple une carrure de montre 50 selon la figure 4, en matériau composite à matrice céramique consiste à déposer plusieurs couches successives 10, 20, 30,40 dans un moule (non représenté).

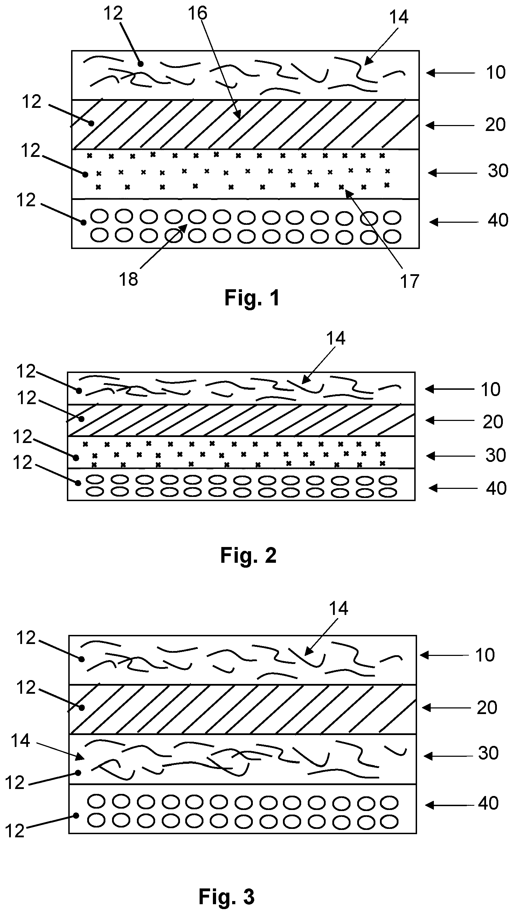

En référence à la figure 1, chacune des couches successives 10, 20, 30, 40 du matériau composite comporte une poudre céramique 12 pré-compactée. La dernière couche 10 comporte en outre des fibres 14 mélangées à la poudre céramique. Les fibres 14 sont mélangées à la poudre céramique 12 avant l'application de la dernière couche dans le moule afin d'obtenir une dernière couche 10 où les fibres sont disposées de manière aléatoire.

La poudre céramique 12 pré-compactée de chaque couche forme une matrice céramique.

La poudre 12 constituant la matrice céramique peut, par exemple, être un composite sélectionné parmi un des trois composites suivants : Zircone à matrice d'alumine (ZTA), Alumine à matrice Zircone (ATZ) et Zircone stabilisée au moins partiellement à l'Yttrium (Y-TZP).

Selon une autre forme de réalisation, la matrice céramique 12 peut comporter un mélange des trois composites susmentionnés

Les fibres 14 disposées de manière aléatoire dans la matrice céramique 12 de la couche 10 sont par exemple des fibres choisies parmi des fibres de carbone, des fibres de basalte, des fibres de verre et des fibres d'aramide. La matrice céramique peut également incorporer un mélange de ces différents types de fibres. La proportion en masse des fibres dans la couche 10 est généralement comprise entre 1.5% et 55%, préférablement entre 1.5% à 25%, voire entre 1.5% et 10%. Par ailleurs, la longueur de ces fibres sont comprises entre 2mm et 70mm, préférablement entre 3mm et 50mm, voire entre 3mm et 6mm.

Les autres couches 20, 30, 40 du matériau composite de la figure 1 sont constituées par une matrice céramique pouvant comporter chacune des pigments 16, 17, 18 de différentes natures afin de conférer à ces couches différentes couleurs de sorte que le composant horloger, obtenu par un procédé de frittage FAST/SPS et rectifié par usinage afin d'obtenir les dimensions finales du composant, présente un aspect visuel où la démarcation entre les différentes couches soit visible à la surface du composant horloger.

Le matériau composite selon la figure 1 subit ensuite une opération de frittage FAST/SPS. Après l'opération de compression et frittage, les dimensions du matériau composite se trouvent notablement réduites dans une dimension comme on peut le voir à la figure 2.

Le temps et la température de frittage dépendent de la composition des différentes couches 10, 20, 30, 40, mais également de la taille et de la forme de pièce à fritter. La plage de température est comprise entre 800 et 2000°C, préférentiellement entre 900 et 1500°C alors que le temps de frittage (temps de plateau) est compris entre 1 et 90 minutes, préférentiellement entre 2 et 45 minutes lorsque chacune des couches comporte une matrice céramique. Par exemple pour une carrure de montre constituée d'une première couche de Zircone stabilisée à l'Yttrium d'une épaisseur de 1mm, de couleur verte et comprenant 5% en masse de fibres de carbone, d'une deuxième couche de Zircone stabilisée à l'Yttrium d'une épaisseur de 2mm et de couleur bleue, d'une troisième couche de Zircone stabilisée à l'Yttrium d'une épaisseur de 2mm et de couleur verte, et d'une quatrième couche de Zircone stabilisée à l'Yttrium d'une épaisseur de 1 mm, de couleur brune et comprenant 10% en masse de fibres de carbone, la température de frittage est d'environ 1050°C et le temps de frittage est d'environ 12 minutes.

Une fois l'opération de frittage FAST/SPS effectuée, le matériau composite est refroidi et démoulé. Le matériau composite fritté est ensuite usiné aux dimensions finales du composant horloger afin d'obtenir par exemple une carrure de montre illustrée à la figure 4. Selon une alternative, la pièce n'est pas usinée mais terminée, par exemple polie ou décorée.

Selon une forme de réalisation illustrée par la figure 3, les couches successives du matériau composite 10, 20, 30, 40 à matrice céramique comporte une première et seconde couches 10, 30 comportant chacune des fibres 14 disposées de manière aléatoire. La disposition des fibres 14 de la première couche 10 est différente de la disposition des fibres de la seconde couche 30. Les première et seconde couches 10, 30 sont séparées par une troisième couche 20 qui peut comporter un certain type de pigments 16 afin de conférer à cette couche un aspect visuel particulier, notamment au niveau de sa couleur, qui est différent de l'aspect visuel des première et seconde couches 10, 30.

Selon une autre forme de réalisation non-illustrée, au moins deux couches adjacentes de la succession de couches formant le matériau composite comportent des fibres. La composition de l'une des deux couches adjacentes est différente de la composition de l'autre des deux couches.

Selon une forme de réalisation additionnelle non-illustrée, toutes les couches de succession de couches formant le matériau composite comportent des fibres. La composition de l'une des couches est différente de la composition de l'une quelconque des autres couches.

Le composant horloger obtenu par le procédé de fabrication par frittage FAST/SPS selon l'invention, par exemple la carrure 50 illustrée à la figure 4, a pour avantage d'être léger, de posséder une haute résistance aux rayures ainsi qu'un aspect visuel unique et aléatoire, c'est-à-dire que l'aspect visuel des composants horlogers obtenus par ce procédé de fabrication diffère d'un composant à l'autre.

Grâce à l'aspect visuel unique des fibres, on obtient un composant horloger d'aspect visuel unique, telle qu'une carrure de montre, Cela permet d'authentifier ou identifier une pièce horlogère comportant par exemple la carrure de montre fabriquée selon le procédé décrit précédemment. L'authentification ou l'identification de la pièce horlogère peut être effectuée par comparaison de l'aspect visuel de la pièce photographiée, ou de caractéristiques de cet aspect, avec des photographies de référence ou des bases de données de caractéristiques de pièces de référence.

Par exemple, la méthode comporte dans un premier temps la capture d'une image du composant horloger de la pièce horlogère présentant à la surface des fibres réparties de manière aléatoire, par exemple une portion de la carrure. L'image capturée est ensuite comparée à une base de données d'images stockée sur un serveur. La base de données comporte une série d'images de fibres réparties de manière aléatoire créée à partir d'une multitude d'images capturées pour chaque composant horloger fabriqué par le procédé selon l'invention.

L'authentification ou l'identification de la pièce d'horlogère est ensuite effectuée par la correspondance de l'image capturée à une des images de la base de données.

## Revendications

1. Procédé de fabrication d'un composant horloger (50) en matériau composite à matrice céramique comportant les étapes suivantes :
- déposer dans un moule une succession de couches (10, 20, 30, 40) comprenant chacune une poudre céramique (12), au moins une couche (10 ; 10, 30 ; 10, 20, 30, 40) de ladite succession de couches comportant en outre des fibres (14) mélangées à la poudre céramique (12), les fibres (14) étant disposées de manière aléatoire ;
- effectuer une opération de frittage FAST/SPS ;
- démouler le composant horloger fritté comportant la succession de couches (10, 20, 30, 40), et
- usiner ou terminer le composant fritté aux dimensions finales du composant horloger (50) de telle manière que lesdites fibres (14) soient visibles en surface du composant horloger (50).

2. Procédé selon la revendication 1, dans lequel au moins deux couches (10, 30) de ladite succession de couches (10, 20, 30, 40) comportent des fibres (14).

3. Procédé selon la revendication précédente, dans lequel lesdites aux moins deux couches (10, 30) sont séparées par une autre couche (20) de ladite succession de couches (10, 20, 30, 40), ladite autre couche (20) ne comportant pas de fibres (14).

4. Procédé selon la revendication 2, dans lequel lesdites aux moins deux couches (10, 30) sont adjacentes, la composition de l'une des deux couches (10, 30) étant différente de la composition de l'autre des deux couches.

5. Procédé selon la revendication 1, dans lequel toutes les couches de ladite succession de couches (10, 20, 30, 40) comportent des fibres (14), la composition de l'une des couches (10, 20, 30, 40) étant différente de la composition de l'une quelconque des autres couches.

6. Procédé selon l'un des revendication 1 à 5, dans lequel le temps de frittage est compris entre 1 minute et 90 minutes, préférentiellement entre 2 et 45 minutes.

7. Procédé selon l'une des revendications précédentes, dans lequel les températures de frittage sont comprises entre 800°C et 2000°C, préférentiellement entre 900 et 1500°C

8. Procédé selon l'une des revendications précédentes, dans lequel ladite poudre céramique (12) est un composite sélectionné parmi un des trois composites suivants : Zircone à matrice d'alumine (ZTA), Alumine à matrice Zircone (ATZ) et Zircone stabilisée au moins partiellement à l'Yttrium (Y-TZP).

9. Procédé selon l'une des revendications 1 à 7, dans lequel ladite poudre céramique (12) est composée d'un mélange de Zircone à matrice d'alumine (ZTA), d'Alumine à matrice Zircone (ATZ), et de Zircone stabilisée au moins partiellement à l'Yttrium (Y-TZP).

10. Procédé selon l'une des revendications précédentes, dans lequel les fibres (14) sont choisies parmi les fibres de carbone, les fibres de basalte, les fibres de verre et les fibres d'aramide.

11. Procédé selon l'une des revendications précédentes, dans lequel la proportion en masse des fibres (14) dans ladite au moins une couche (10 ; 10, 30 ; 10, 20, 30, 40) comportant des fibres est comprise entre 1.5% et 55%, préférablement entre 1.5% à 25%.

12. Procédé selon l'une des revendications précédentes, dans lequel les fibres (14) ont une longueur comprise entre 2mm et 70mm, préférablement entre 3mm et 50mm.

13. Procédé selon l'une des revendications précédentes, dans lequel le composant horloger est un composant d'un boitier de montre, notamment une carrure (50), un fond du boitier, une lunette ou une couronne.

14. Procédé selon l'une des revendications 1 à 12, dans lequel le composant horloger est un composant d'un mouvement de montre, notamment une platine ou un pont.

## Patentansprüche

1. Ein Verfahren zur Herstellung einer Uhrenkomponente (50) aus einem Verbundmaterial mit Keramikmatrix, die folgenden Schritte umfassend:
- Einbringen einer Folge von Schichten (10, 20, 30, 40), die jeweils ein Keramikpulver (12) enthalten, in eine Form, wobei zumindest eine der Schichten (10; 10, 30; 10, 20, 30, 40) der Folge von Schichten unter anderem Fasern (14) enthält, die mit dem Keramikpulver (12) vermischt sind, und wobei die Fasern (14) nach dem Zufallsprinzip angeordnet sind ;
- Durchführen eines FAST/SPS-Sintervorgangs ;
- Entfernen der gesinterten Uhrenkomponente, die die Folge von Schichten (10, 20, 30, 40) umfasst, aus der Form und
- Bearbeiten oder Fertigstellen der gesinterten Komponente auf die endgültigen Abmessungen der Uhrenkomponente (50), so dass die Fasern (14) auf der Oberfläche der Uhrenkomponente (50) sichtbar sind.

2. Das Verfahren nach Anspruch 1, bei dem mindestens zwei Schichten (10, 30) der Abfolge von Schichten (10, 20, 30, 40) Fasern (14) aufweisen.

3. Das Verfahren nach dem vorhergehenden Anspruch, bei dem die mindestens zwei Schichten (10, 30) durch eine weitere Schicht (20) der Abfolge von Schichten (10, 20, 30, 40) getrennt sind, wobei die weitere Schicht (20) keine Fasern (14) aufweist.

4. Das Verfahren nach Anspruch 2, bei dem die mindestens zwei Schichten (10, 30) benachbart sind, wobei sich die Zusammensetzung einer der beiden Schichten (10, 30) von der Zusammensetzung der anderen der beiden Schichten unterscheidet.

5. Das Verfahren nach Anspruch 1, bei dem alle Schichten der Schichtenfolge (10, 20, 30, 40) Fasern (14) aufweisen, wobei sich die Zusammensetzung einer der Schichten (10, 20, 30, 40) von der Zusammensetzung einer beliebigen der anderen Schichten unterscheidet.

6. Das Verfahren nach einem der Ansprüche 1 bis 5, bei dem die Sinterzeit zwischen 1 Minute und 90 Minuten, vorzugsweise zwischen 2 und 45 Minuten, beträgt.

7. Das Verfahren nach einem der vorhergehenden Ansprüche, bei dem die Sintertemperaturen zwischen 800°C und 2000°C, vorzugsweise zwischen 900 und 1500°C, betragen.

8. Das Verfahren nach einem der vorhergehenden Ansprüche, wobei das Keramikpulver (12) ein Verbundwerkstoff ist, der aus einem der folgenden drei Verbundwerkstoffe ausgewählt ist: Aluminiumoxid-Matrix-Zirkoniumoxid, Aluminiumoxid-Zirkoniumoxid-Matrix und zumindest teilweise mit Yttrium stabilisiertes Zirkoniumoxid.

9. Das Verfahren nach einem der Ansprüche 1 bis 7, wobei das Keramikpulver (12) aus einer Mischung aus Aluminiumoxid-Matrix-Zirkoniumoxid, Zirkoniumoxid-Matrix-Aluminiumoxid und zumindest teilweise mit Yttrium stabilisiertem Zirkoniumoxid zusammengesetzt ist.

10. Das Verfahren nach einem der vorhergehenden Ansprüche, wobei die Fasern (14) aus Kohlenstofffasern, Basaltfasern, Glasfasern und Aramidfasern ausgewählt werden.

11. Das Verfahren nach einem der vorhergehenden Ansprüche, wobei der Massenanteil der Fasern (14) in der mindestens einen Schicht (10; 10, 30; 10, 20, 30, 40) mit Fasern zwischen 1,5 % und 55 %, vorzugsweise zwischen 1,5 % und 25 %, beträgt.

12. Das Verfahren nach einem der vorhergehenden Ansprüche, bei dem die Fasern (14) eine Länge zwischen 2 mm und 70 mm, vorzugsweise zwischen 3 mm und 50 mm, aufweisen.

13. Das Verfahren nach einem der vorhergehenden Ansprüche, wobei die Uhrenkomponente eine Komponente eines Uhrengehäuses ist, insbesondere ein Gehäusemittelteil (50), ein Gehäuseboden, eine Lünette oder eine Krone.

14. Das Verfahren nach einem der Ansprüche 1 bis 12, wobei die Uhrenkomponente eine Komponente eines Uhrwerks ist, insbesondere eine Platine oder eine Brücke.

## Claims

1. Manufacturing process for a watch component (50) in a composite material with a ceramic matrix, comprising the following steps:
- depositing in a mould a succession of layers (10, 20, 30, 40), each comprising a ceramic powder (12), at least one layer (10; 10, 30; 10, 20, 30, 40) of said succession of layers further comprising fibres (14) mixed with the ceramic powder (12), the fibres being arranged randomly;
- performing a FAST/SPS sintering operation;
- demoulding the sintered watch component comprising the succession of layers (10, 20, 30, 40), and
- machining or finishing the sintered component to the final dimensions of the watch component (50) such as said fibres (14) are visible on the surface of the watch component (50).

2. Process according to claim 1, wherein at least two layers (10, 30) of said succession of layers (10, 20, 30, 40) comprise fibers (14).

3. Process according to the preceding claim, wherein said at least two layers (10, 30) are separated by another layer (20) of said succession of layers (10, 20, 30, 40), said another layer does not comprising fibers (14).

4. Process according to claim 2, wherein said at least two layers (10, 30) are adjacent, the composition of one of the two layers (10, 30) being different from the composition of the other of the two layers.

5. Process according to claim 1, wherein all layers of said succession of layers (10, 20, 30, 40) comprise fibres (14), the composition of one of the layers (10, 20, 30, 40) being different from the composition of any of the other layers.

6. Process according to any of claims 1 to 5, wherein the sintering time is between 1 and 90 minutes, preferably between 2 and 45 minutes.

7. Process according to any preceding claim, wherein the sintering temperatures are between 800°C and 2000°C, preferably between 900 and 1500°C.

8. Process according to any preceding claim, wherein said ceramic powder (12) is a composite selected from one of the following three composites: Zirconia with Alumina Matrix (ZTA), Alumina with Zirconia Matrix (ATZ) and Zirconia stabilized at least partially with Yttrium (Y-TZP).

9. Process according to any of claims 1 to 7, wherein said ceramic powder (12) is composed of a mixture of Zirconia with Alumina Matrix (ZTA), of Alumina with Zirconia Matrix (ATZ), and of Zirconia stabilized at least partially with Yttrium (Y-TZP).

10. Process according to any preceding claim, wherein the fibres (14) are selected from carbon fibres, basalt fibres, glass fibres and aramid fibres.

11. Process according to any preceding claim, wherein the proportion by mass of the fibres (14) in said at least one layer (10; 10, 30; 10, 20, 30, 40) comprising fibres is between 1.5% and 55%, preferably between 1.5% and 25%.

12. Process according to any preceding claim, wherein the fibres (14) have a length between 2mm and 70mm, preferably between 3mm and 50mm.

13. Process according to any preceding claim, wherein the watch component is a component of a watch case, in particular a case middle (50), a case back, a bezel or a crown.

14. Process according to any of claims 1 to 12, wherein the watch component is a component of a watch movement, in particular a lock plate or a bridge.
